(19) Europäisches Patentamt / European Patent Office / Office européen des brevets

(11) **EP 4 336 529 A1**

(12) **EUROPEAN PATENT APPLICATION**
published in accordance with Art. 153(4) EPC

(43) Date of publication:
**13.03.2024  Bulletin 2024/11**

(21) Application number: **22819860.2**

(22) Date of filing: **14.03.2022**

(51) International Patent Classification (IPC):
$H01G\ 11/58$ [(2013.01)]   $H01M\ 6/16$ [(2006.01)]
$H01M\ 10/0566$ [(2010.01)]   $H01M\ 10/0567$ [(2010.01)]
$H01M\ 10/0568$ [(2010.01)]   $H01M\ 10/0569$ [(2010.01)]

(52) Cooperative Patent Classification (CPC):
H01G 11/58; H01M 6/16; H01M 10/0566;
H01M 10/0567; H01M 10/0568; H01M 10/0569

(86) International application number:
**PCT/JP2022/011323**

(87) International publication number:
**WO 2022/259670 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **07.06.2021   JP 2021094944**

(71) Applicant: **Nippon Shokubai Co., Ltd.
Osaka-shi, Osaka 541-0043 (JP)**

(72) Inventors:
• **NISHIHATA, Ryo**
  **Suita-shi, Osaka 564-0034 (JP)**
• **KOBATAKE, Takayuki**
  **Suita-shi, Osaka 564-0034 (JP)**
• **OOKUBO, Chie**
  **Suita-shi, Osaka 564-0034 (JP)**

(74) Representative: **Germain Maureau
12, rue Boileau
69006 Lyon (FR)**

(54)   **STORAGE METHOD FOR NON-AQUEOUS ELECTROLYTE**

(57)   A method for storing a non-aqueous electrolyte solution containing a lithium salt in a sealed container, wherein at least one of carbon dioxide ($CO_2$) or carbon monoxide (CO) occupying a gas phase part in the sealed container has a concentration of 10% or more.

EP 4 336 529 A1

**Description**

TECHNICAL FIELD

The present disclosure relates to a method for storing a non-aqueous electrolyte solution.

BACKGROUND ART

In general, a non-aqueous electrolyte solution used in a secondary battery such as a lithium ion secondary battery is stored in a sealed metal container. The battery performance is greatly affected if the non-aqueous electrolyte solution deteriorates and changes in characteristics during storage, and various studies have been made on a method for stably storing the non-aqueous electrolyte solution.

For example, Patent Document 1 proposes a method for storing a non-aqueous electrolyte solution in a container having a body made of materials including aluminum with a purity of 99% or higher or an aluminum-manganese alloy layer, a resin lid, and a polyethylene resin inner plug to be fitted into a liquid injection port of the container. This method keeps the moisture content of the non-aqueous electrolyte solution after stored in the container for 30 days to 50 ppm or less.

CITATION LIST

PATENT DOCUMENT

Patent Document 1: Japanese Unexamined Patent Publication No. 2013-77567

SUMMARY OF THE INVENTION

TECHNICAL PROBLEM

Based on the studies so far, the applicant has found that a non-aqueous electrolyte solution containing a lithium salt such as lithium bis(fluorosulfonyl)imide as an electrolyte improves performance of a lithium ion secondary battery such as high-temperature durability and charge-discharge cycle characteristics.

When a non-aqueous electrolyte solution containing a lithium salt is stored by an existing storage method, the lithium salt may be hydrolyzed during storage. The degree of decomposition of the lithium salt is considered to correlate with a storage period. Thus, if a non-aqueous electrolyte solution stored for a different period is used, the battery performance may vary due to deterioration of the electrolyte solution although the salt composition of the electrolyte solution is the same. The difference in battery performance lowers the quality of the battery.

Under these circumstances, the present disclosure has been made to store a non-aqueous electrolyte solution containing a lithium salt stably while suppressing decomposition of the lithium salt.

SOLUTION TO THE PROBLEM

In order to achieve the object, the disclosed technique paid attention to a gas phase part in a sealed container (a void in the sealed container) after the container is filled with the non-aqueous electrolyte solution, and devised the composition of gas in the gas phase part. The present disclosure will be specifically described below.

The present disclosure is directed to a method for storing a non-aqueous electrolyte solution containing a lithium salt in a sealed container, wherein at least one of carbon dioxide ($CO_2$) or carbon monoxide (CO) occupying a gas phase part in the sealed container has a concentration of 10% or more. In this method, a positive pressure may be maintained inside the sealed container, or an internal pressure of the sealed container may be kept at 1.1 atm or more.

In this method, the non-aqueous electrolyte solution may contain a carbonate solvent. The non-aqueous electrolyte solution may contain at least one of carbon dioxide ($CO_2$), carbon monoxide (CO), a bicarbonate ion ($HCO_3^-$), or a carbonate ion ($CO_3^{2-}$) dissolved in a total amount of 20 ppm by mass or more. The lithium salt may contain a sulfonylimide compound represented by the general formula (1):

$$LiN(R^1SO_2)(R^2SO_2) \qquad (1)$$

(wherein $R^1$ and $R^2$ are identical or different from each other and each represent a fluorine atom, an alkyl group with 1 to 6 carbon atoms, or a fluoroalkyl group with 1 to 6 carbon atoms). The lithium salt may contain at least one selected from the group consisting of a compound represented by the general formula (2): $LiPF_a(C_mF_{2m+1})_{6-a}$ (2) (where $0 \leq a \leq$

6 and $1 \leq m \leq 4$), a compound represented by the general formula (3): $LiBF_b(C_nF_{2n+1})_{4-b}$ (3) (where $0 \leq b \leq 4$ and $1 \leq n \leq 4$), and $LiAsF_6$. The non-aqueous electrolyte solution may further contain a compound represented by the general formula (4): $M^1PO_cF_d$ (4) (where $M^1$ represents an alkali metal element, $1 \leq c \leq 3$, and $1 \leq d \leq 3$).

ADVANTAGES OF THE INVENTION

According to the present disclosure, a non-aqueous electrolyte solution containing a lithium salt can be stably stored while reducing decomposition of the lithium salt.

DESCRIPTION OF EMBODIMENTS

The following description of preferred embodiments is merely an example in nature and is not intended to limit the scope, applications, or use of the present disclosure.

<Method for Storing Non-Aqueous Electrolyte Solution>

By a method for storing a non-aqueous electrolyte solution of the present disclosure, a non-aqueous electrolyte solution containing a lithium salt such as a specific sulfonylimide compound described later (hereinafter also referred to as a "sulfonylimide electrolyte solution") is stored in a sealed container.

The present applicant has disclosed, in Japanese Patent Application No. 2021-032987, a non-aqueous electrolyte solution containing at least one of carbon dioxide ($CO_2$), carbon monoxide ($CO$), a bicarbonate ion ($HCO_3^-$), or a carbonate ion ($CO_3^{2-}$) (hereinafter also referred to as "$CO_2$ or other component") dissolved in a total amount of 20 ppm by mass or more. This electrolyte solution will be hereinafter also referred to as an "electrolyte solution dissolving $CO_2$ or other component." The method for storing the non-aqueous electrolyte solution of the present disclosure is also suitable as a method for storing the electrolyte solution dissolving $CO_2$ or other component in a sealed container.

In this specification, the sulfonylimide electrolyte solution (an electrolyte solution containing no $CO_2$ or other component dissolved) and the electrolyte solution containing $CO_2$ or other component dissolved will be collectively referred to as a "target electrolyte solution" to be stored. In addition, the sulfonylimide electrolyte solution or the electrolyte solution containing $CO_2$ or other component dissolved may be simply referred to as a "non-aqueous electrolyte solution."

(Sealed Container)

Preferably, the sealed container is made of a material and has a structure that are resistant to moisture contamination. More preferably, the sealed container is highly airtight so that the internal pressure of the container can be maintained. Still more preferably, the sealed container is hermetic (closed). The container can be made hermetic by, for example, providing a valve in part of the container.

The sealed container (or a part of the container to be in contact with the contents (the target electrolyte solution)) in particular, may be made of any material. Examples of the material include: metals such as stainless steel (e.g., SUS316), aluminum, aluminum alloys, and Hastelloy (registered trademark); fluorine-based resins such as tetrafluoroethylene-perfluoroalkyl vinyl ether copolymers (perfluoro alkoxyl alkane, PFA) and polytetrafluoroethylene (PTFE); olefin-based resins such as polyethylene (PE) and polypropylene (PP); and glass. Among these materials, stainless steel and PFA are preferable.

An inner surface of the sealed container made of metal material described above may be coated with a resin. Any resin may be used for the coating, and fluorine-based resins (e.g., PTFE, PFA, and a tetrafluoroethylene-hexafluoropropylene copolymer (FEP)) and olefin-based resins (e.g., PP) are usable.

The sealed container may be a canister can, a plastic container, a container made of a fluorine-based resin, or a pouch-shaped container. The sealed container may include an inner resin bag and an outer metal casing.

The sealed container may have any shape, such as a bottle, a cylinder, an aluminum-lined paper carton, and an aluminum pouch.

Examples of the bottle or cylinder-shaped container include a sealed container having a circular, oval, or polygonal horizontal cross section. Among them, a sealed container having the circular horizontal cross section is preferable in view of strength and processability. The sealed container may be shaped to have a continuously varying vertical cross-sectional area.

An example of the aluminum-lined paper carton is a sealed prismatic container having a quadrangular horizontal cross-section. The aluminum-lined paper may have a multilayer structure including a resin layer 1, an aluminum or aluminum alloy layer, a resin layer 2, a paper layer, and a resin layer 3 laminated in this order from the side (inner side) in contact with the target electrolyte solution. Examples of the resin layer 1 include a polyolefin layer made of PE or PP and/or a polyester layer such as PET. Examples of the resin layers 2 and 3 include a polyolefin layer such as PE or PP.

The paper layer may be made of any type of paper, such as manila cardboard and white cardboard which are used as boxboard.

Examples of the aluminum pouch include a sealed container having a multilayer structure including a laminate of a resin layer of polyolefin such as PP, polyester such as PET, or polyamide such as NY and an aluminum layer or an aluminum alloy layer.

The sealed container may have any volume, for example, about 100 L to 1000 L.

The volume of a liquid phase part [a part occupied by the contents (the target electrolyte solution)] of the sealed container and the volume of a gas phase part [a void (head space) other than the liquid phase part] preferably have a ratio (a space volume ratio) of 50% or less, more preferably 30% or less, still more preferably 15% or less, most preferably 10% or less, in view of filling efficiency of the target electrolyte solution. The lower limit of the space volume ratio is preferably 5% or more because the presence of the gas phase part allows addition of gas which will be described later.

(Gas filling Gas Phase Part in Sealed Container)

By the method for storing a non-aqueous electrolyte solution of the present disclosure, the sealed container is filled (charged) with the target electrolyte solution, and then the gas phase part (the void) in the sealed container is filled with at least one of carbon dioxide ($CO_2$) or carbon monoxide (CO), which may also be referred to as a "$CO_2$/CO-containing gas." In other words, gas components constituting the gas phase part include the $CO_2$/CO-containing gas.

Examples of the $CO_2$/CO-containing gas include a gas containing $CO_2$ as a main component (a carbon dioxide gas), a gas containing CO as a main component, and a mixture gas containing $CO_2$ and CO (will be hereinafter referred to as a "$CO_2$/CO mixture gas"). When the electrolyte solution containing $CO_2$ or other component dissolved is stored, the $CO_2$/CO-containing gas may be appropriately selected depending on the kinds of components dissolved in the electrolyte solution dissolving $CO_2$ or other component. For example, when an electrolyte solution dissolving at least one of $CO_2$, $HCO_3^-$, or $CO_3^{2-}$ is stored in the sealed container, the carbon dioxide gas and the $CO_2$/CO mixture gas are preferable among the examples of the $CO_2$/CO-containing gas. When an electrolyte solution dissolving CO is stored in the sealed container, the gas containing CO as the main component and the $CO_2$/CO mixture gas are preferable among the examples of the $CO_2$/CO-containing gas. A general commercially available product can be used as the $CO_2$/CO-containing gas. The purity of the $CO_2$/CO-containing gas is preferably high, although it is not limited to a particular value. For example, the purity may be 99.90 vol% or more (water content: 0.012 vol% or less).

By the method for storing the non-aqueous electrolyte solution of the present disclosure, the $CO_2$/CO-containing gas occupying the gas phase part present in the sealed container has a concentration of 10% (vol%) or more (a content ratio of the $CO_2$/CO-containing gas when the entire gas phase part is 100% (vol%)).

In an environment where the concentration of the $CO_2$/CO-containing gas in the gas phase part is low (e.g., less than 10%) as in the existing storage method, impurities such as sulfate ions ($SO_4^{2-}$), which lead to accelerated decomposition of the sulfonylimide compound, are generated, and the sulfonylimide electrolyte solution is gradually deteriorated. However, by the storage method of the present disclosure, the concentration of the $CO_2$/CO-containing gas in the gas phase part is controlled to 10% or more to keep the impurities from generating, and the decomposition of the sulfonylimide compound is inhibited although the water content in the sulfonylimide electrolyte solution after storage exceeds 50 ppm by mass. This suppresses the deterioration of the sulfonylimide electrolyte solution during the storage period, and thus, variations in battery performance due to the differences in storage period of the sulfonylimide electrolyte solution are less likely to occur.

In an environment where the concentration of the $CO_2$/CO-containing gas in the gas phase part is low (e.g., less than 10%) as in the existing storage method, the electrolyte solution containing $CO_2$ or other component dissolved gradually loses $CO_2$ or other component dissolved, and the improvement caused by the dissolution of $CO_2$ or other component gradually decreases. The amount of loss of $CO_2$ or other component is considered to correlate with the storage period. Thus, if an electrolyte solution dissolving $CO_2$ or other component stored for a different period is used, the improvement in battery performance caused by the dissolution of $CO_2$ or other component becomes unstable although the salt composition of the electrolyte solution is the same, resulting in variations in battery performance. By the storage method of the present disclosure, however, the concentration of the $CO_2$/CO-containing gas in the gas phase part is controlled to 10% or more, stabilizing the amount of $CO_2$ of other component dissolved in the electrolyte solution containing $CO_2$ or other component dissolved. As a result, the improvement caused by the dissolution of $CO_2$ or other component can be achieved with stability although a different electrolyte solution dissolving $CO_2$ or other component stored for a different storage period is used.

The concentration of the $CO_2$/CO-containing gas in the gas phase part is not limited to a particular value as long as it is 10% or more, but is preferably 20% or more, more preferably 40% or more, yet more preferably 50% or more, still more preferably 80% or more, particularly preferably 90% or more, and the upper limit may be 100%, in view of suppressing the decomposition of the sulfonylimide compound, keeping a stable amount of $CO_2$ or other component dissolved in the electrolyte solution, and allowing the $CO_2$/CO-containing gas in the gas phase part to be dissolved in the liquid phase part (the target electrolyte solution) during the storage. The concentration of the $CO_2$/CO-containing gas in the gas phase part can be measured and analyzed by the method described in Examples below, for example, using a commercially available detection tube. The concentration can be measured at any temperature and pressure, for example, at a temperature of 10°C to 50°C and a pressure of 0.05 MPa to 0.2 MPa. The temperature and pressure within these ranges are not considered to have influence on the result of the gas concentration analysis unless part of the gas composition is decomposed or brought into a supercritical state.

The gas phase part may contain other gas components than the $CO_2$/CO-containing gas as long as they do not impair the object of the present invention. Examples of the other gas components include active gases such as air and oxygen, inert gases such as nitrogen ($N_2$) gas, helium (He) gas, and argon (Ar) gas, and dry air (e.g., having a dew point of -60°C or lower). As the inert gas and the dry air, general commercially available products can be used. The $CO_2$/CO-containing gas may contain other gas components.

The temperature of the target electrolyte solution (the internal temperature of the sealed container during storage) is not limited to a particular value, and may be, for example, 60°C or lower (50°C or lower or 40°C or lower) and -40°C or higher (-30°C or higher, -20°C or higher, -10°C or higher, or 0°C or higher). Appropriate control of the temperature suppresses coagulation or decomposition of the target electrolyte solution.

(Method of Injecting Gas into Gas Phase Part in Sealed Container and Pressurizing Gas Phase Part)

The gas phase part in the sealed container may be filled with the $CO_2$/CO-containing gas by any known method without particular limitation. The gas phase part may be filled with the $CO_2$/CO-containing gas alone, the $CO_2$/CO-containing gas and other gas components, or a mixed composition gas obtained by mixing the $CO_2$/CO-containing gas and the other gas components in a predetermined ratio in advance. When the $CO_2$/CO-containing gas is used in combination with the other gas components, the mixing ratio of the $CO_2$/CO-containing gas may be appropriately determined so that the concentration of the $CO_2$/CO-containing gas in the gas phase part falls within the above-described numerical range.

(Pressure in Sealed Container)

A positive pressure (a pressure higher than the outside pressure) is preferably maintained inside the sealed container by pressurizing the gas phase part in the sealed container. In an environment where the pressure in the sealed container (hereinafter also referred to as an "internal pressure of the container") is lower than the outside pressure, the electrolyte solution containing CO2 or other component dissolved gradually loses $CO_2$ or other component dissolved, and the improvement caused by the dissolution of $CO_2$ or other component gradually decreases. On the other hand, when the internal pressure of the container is kept higher than the outside pressure, the $CO_2$/CO-containing gas filling the gas phase part allows improved storage of the non-aqueous electrolyte solution.

The internal pressure of the sealed container (internal pressure of the container) is not limited to a particular value as long as it is 1 atm (0.1013 MPa) or more, and is preferably 1.1 atm (0.1115 MPa) or more, more preferably 1.5 atm (0.1520 MPa) or more, yet more preferably 2 atm (0.2027 MPa) or more, and the upper limit is 5 atm (0.5066 MPa) or less. When the internal pressure of the container is maintained in the above numerical range, the $CO_2$/CO-containing gas filling the gas phase part further improves the storage of the non-aqueous electrolyte solution. The internal pressure of the container can be appropriately measured using, for example, a pressure gauge attached to the container.

Examples of the method of pressurizing the gas phase part include: a method of pouring the target electrolyte solution in the sealed container and then filling the container with the mixed composition gas to pressurize the gas phase part; a method of pouring the target electrolyte solution in the sealed container and then filling the container with the $CO_2$/CO-containing gas to pressurize the gas phase part; a method of pouring the target electrolyte solution in the sealed container, injecting the $CO_2$/CO-containing gas, and additionally injecting the other gas components to pressurize the gas phase part; a method of injecting the $CO_2$/CO-containing gas and optionally the other gas components in the sealed container and then filling the container with the target electrolyte solution to pressurize the gas phase part; and a method of filling the sealed container with the target electrolyte solution, the $CO_2$/CO-containing gas, and optionally the other gas components and then closing the sealed container to pressurize the gas phase part by volume reduction caused by the closing (sealing) of the container.

The method for storing the non-aqueous electrolyte solution of the present disclosure can be applied not only to the storage of the sulfonylimide electrolyte solution or the electrolyte solution containing CO2 or other component dissolved just produced (at the time of shipment from a factory), but also to the storage of the electrolyte solution remaining in the sealed container after use. Specifically, for the storage of the remaining electrolyte solution, the $CO_2$/CO-containing gas (and optionally the other gas components) may be additionally injected in the gas phase part in the sealed container as necessary.

<Non-Aqueous Electrolyte Solution>

(Electrolyte)

The sulfonylimide electrolyte solution that is stably stored by the storage method of the present disclosure contains, as an electrolyte (lithium salt), a sulfonylimide compound represented by the general formula (1):

[Chemical 1]    $LiN(R^1SO_2)(R^2SO_2)$ (1)

(hereinafter referred to as a "sulfonylimide compound (1)", a fluorine-containing sulfonylimide salt). When the sulfonylimide compound (1) is contained as the electrolyte, an initial interface resistance and direct current resistance (DCR) of the battery are reduced.

In the general formula (1), $R^1$ and $R^2$ are identical to or different from each other and each (independently) represent a fluorine atom, an alkyl group with 1 to 6 carbon atoms, or a fluoroalkyl group with 1 to 6 carbon atoms.

Examples of the alkyl group with 1 to 6 carbon atoms include a methyl group, an ethyl group, a propyl group, an isopropyl group, a butyl group, a pentyl group, and a hexyl group. Among the alkyl groups with 1 to 6 carbon atoms, a linear or branched alkyl group with 1 to 6 carbon atoms is preferable, and a linear alkyl group with 1 to 6 carbon atoms is more preferable.

Examples of the fluoroalkyl group with 1 to 6 carbon atoms include one obtained by substituting some or all of hydrogen atoms contained in an alkyl group with 1 to 6 carbon atoms with fluorine atoms. Examples of the fluoroalkyl group with 1 to 6 carbon atoms include a fluoromethyl group, a difluoromethyl group, a trifluoromethyl group, a fluoroethyl group, a difluoroethyl group, a trifluoroethyl group, and a pentafluoroethyl group. In particular, the fluoroalkyl group may be a perfluoroalkyl group.

As the substituents $R^1$ and $R^2$, a fluorine atom and a perfluoroalkyl group (e.g., a perfluoroalkyl group with 1 to 6 carbon atoms, such as a trifluoromethyl group, a pentafluoroethyl group, and a heptafluoropropyl group) are preferable. Among them, the fluorine atom, the trifluoromethyl group, and the pentafluoroethyl group are more preferable, the fluorine atom and the trifluoromethyl group are still more preferable, and the fluorine atom is even more preferable. The substituents $R^1$ and $R^2$ may be identical to or different from each other.

Examples of the sulfonylimide compound (1) include lithium bis(fluorosulfonyl)imide ($LiN(FSO_2)_2$, hereinafter also referred to as "LiFSI"), lithium bis(trifluoromethylsulfonyl)imide ($LiN(CF_3SO_2)_2$, hereinafter also referred to as "LiTFSI"), lithium (fluorosulfonyl)(methylsulfonyl)imide, lithium (fluorosulfonyl)(ethylsulfonyl)imide, lithium (fluorosulfonyl)(trifluoromethylsulfonyl)imide, lithium(fluorosulfonyl)(pentafluoroethylsulfonyl)imide, lithium (fluorosulfonyl)(heptafluoropropylsulfonyl)imide, lithium bis(pentafluoroethylsulfonyl)imide, and lithium bis(heptafluoropropylsulfonyl)imide. The sulfonylimide compounds (1) may be used alone or in combination of two or more of them. Alternatively, as the sulfonylimide compound (1), a commercially available product may be used, or one obtained by synthesis using any known method may also be used.

Among these sulfonylimide compounds (1), $LiN(FSO_2)_2$ and $LiN(CF_3SO_2)_2$ are preferable, and $LiN(FSO_2)_2$ is more preferable, in view of the reduction of the initial interface resistance and DCR of the battery and improvement in low temperature charge-discharge characteristics and charge-discharge cycle characteristics. In other words, the sulfonylimide compound (1) in the sulfonylimide electrolyte solution contains preferably at least one of $LiN(FSO_2)_2$ or $LiN(CF_3SO_2)_2$, more preferably $LiN(FSO_2)_2$.

It is only required that the electrolyte (lithium salt) contains the sulfonylimide compound (1), but the electrolyte may also contain another electrolyte (an electrolyte other than the sulfonylimide compound (1)). Examples of the other electrolyte include an imide salt and a non-imide salt.

Examples of the imide salt include another fluorine-containing sulfonylimide salt (hereinafter referred to as "other sulfonylimide compound") that is different from the sulfonylimide compound (1). Examples of the other sulfonylimide compound include a non-lithium salt of fluorine-containing sulfonylimide listed above as the sulfonylimide compound (1) (e.g., a salt obtained by substituting lithium (ions) in the sulfonylimide compound (1) with cations other than the lithium ions). Examples of the salt substituted with cations other than the lithium ions include: an alkali metal salt such as a sodium salt, a potassium salt, a rubidium salt, and a cesium salt; an alkali earth metal salt such as a beryllium salt, a magnesium salt, a calcium salt, a strontium salt, and a barium salt; an aluminum salt; an ammonium salt; and a phosphonium salt. The other sulfonylimide compounds may be used alone or in combination of two or more of them. Alternatively, as the other sulfonylimide compound, a commercially available product may be used, or one obtained by synthesis using a known method may also be used.

Examples of the non-imide salt include a salt of a non-imide-based anion and a cation (lithium ions and the cations shown above as examples). Examples of the non-imide salt include a compound represented by the general formula (2):

[Chemical 2]    $LiPF_a(C_mF_{2m+1})_{6-a}$ (2) (where $0 \leq a \leq 6$ and $1 \leq m \leq 4$),

(this compound will be hereinafter referred to as a "fluorophosphoric acid compound (2)"), a compound represented by the general formula (3):

[Chemical 3]     $LiBF_b(C_nF_{2n+1})_{4-b}$ (3) (where $0 \leq b \leq 4$ and $1 \leq n \leq 4$), and

(this compound will be hereinafter referred to as a "fluoroboric acid compound (3)"), lithium salts such as lithium hexafluoroarsenate ($LiAsF_6$), $LiSbF_6$, $LiClO_4$, $LiSCN$, $LiAlF_4$, $CF_3SO_3Li$, $LiC[(CF_3SO_2)_3]$, $LiN(NO_2)$, and $LiN[(CN)_2]$, and non-lithium salts (e.g., salts obtained by substituting a lithium (ion) with the above-described cation in these lithium salts, such as $NaBF_4$, $NaPF_6$, and $NaPF_3(CF_3)_3$). These non-imide salts may be used alone or in combination of two or more of them. As the non-imide salt, a commercially available product may be used, or one synthesized by any known method may also be used.

Among the other electrolytes, the non-imide salts are preferable in view of ion conductivity and costs. Among them, the fluorophosphoric acid compound (2), the fluoroboric acid compound (3), and $LiAsF_6$ are preferable, and the fluorophosphoric acid compound (2) is more preferable.

Examples of the fluorophosphoric acid compound (2) include $LiPF_6$, $LiPF_3(CF_3)_3$, $LiPF_3(C_2F_5)_3$, $LiPF_3(C_3F7)_3$, and $LiPF_3(C_4F_9)_3$. Among the examples of the fluorophosphoric acid compound (2), $LiPF_6$ and $LiPF_3(C_2F_5)_3$ are preferable, and $LiPF_6$ is more preferable.

Examples of the fluoroboric acid compound (3) include $LiBF_4$, $LiBF(CF_3)_3$, $LiBF(C_2F_5)_3$, and $LiBF(C_3F_7)_3$. Among the examples of the fluoroboric acid compound (3), $LiBF_4$ and $LiBF(CF_3)_3$ are preferable, and $LiBF_4$ is more preferable.

These electrolytes (the sulfonylimide compound (1) and the other electrolytes) may be present (contained) in the ionic form in the non-aqueous electrolyte solution.

The concentration of the sulfonylimide compound (1) in the non-aqueous electrolyte solution (the content of the sulfonylimide compound (1) or the total content if two or more sulfonylimide compounds (1) are used, the same applies hereinafter) is preferably 0.01 mol/L or more, more preferably 0.05 mol/L or more, yet more preferably 0.1 mol/L or more, still more preferably 0.2 mol/L or more, much more preferably 0.5 mol/L or more, in view of reducing the initial interface resistance and DCR of the battery. The concentration is preferably 5 mol/L or less, more preferably 3 mol/L or less, yet more preferably 2 mol/L or less, in view of keeping the battery performance from decreasing due to the increase in viscosity of the electrolyte solution.

The content of the sulfonylimide compound (1) in the non-aqueous electrolyte solution is preferably 10 mol% or more, more preferably 20 mol% or more, yet more preferably 30 mol% or more, particularly preferably 50 mol% or more with respect to the total of 100 mol% of the electrolyte salt contained in the non-aqueous electrolyte solution, in view of reducing the initial interface resistance and DCR of the battery.

The content of the sulfonylimide compound (1) in the non-aqueous electrolyte solution is preferably 30 mass% or more, more preferably 35 mass% or more with respect to the whole non-aqueous electrolyte solution (the total of 100 mass% of the components in the non-aqueous electrolyte solution), in view of reducing the initial interface resistance and DCR of the battery. The concentration is preferably 70 mass% or less, more preferably 60 mass% or less, yet more preferably 50 mass% or less, in view of keeping the battery performance from decreasing due to the increase in viscosity of the electrolyte solution.

The electrolyte salt may be an electrolyte salt of a simple salt composition containing the sulfonylimide compound (1) alone, or an electrolyte salt of a mixed salt composition containing the sulfonylimide compound (1) and other electrolyte. The electrolyte salt of the mixed salt composition is preferably an electrolyte salt of a mixed salt composition containing the sulfonylimide compound (1) and the fluorophosphoric acid compound (2), more preferably an electrolyte salt of a mixed salt composition containing at least one of $LiN(FSO_2)_2$ or $LiN(CF_3SO_2)_2$ and $LiPF_6$, and particularly preferably an electrolyte salt of a mixed salt composition containing $LiN(FSO_2)_2$ and $LiPF_6$.

When the electrolyte salt of the mixed salt composition containing the sulfonylimide compound (1) and the other electrolyte is used, the concentration of the other electrolyte in the non-aqueous electrolyte solution is preferably 0.1 mol/L or more, more preferably 0.2 mol/L or more, yet more preferably 0.5 mol/L or more, in view of reducing the initial interface resistance and DCR of the battery. The concentration is preferably 1.5 mol/L or less, more preferably 1 mol/L or less, yet more preferably 0.8 mol/L or less, in view of reducing the initial interface resistance and DCR of the battery.

The total concentration of the electrolyte in the non-aqueous electrolyte solution is preferably 0.8 mol/L or more, more preferably 1 mol/L or more, yet more preferably 1.2 mol/L, in view of reducing the initial interface resistance and DCR of the battery. The concentration is preferably 5 mol/L or less, more preferably 3 mol/L or less, yet more preferably 2 mol/L or less, in view of keeping the battery performance from decreasing due to the increase in viscosity of the electrolyte solution.

The concentration of the sulfonylimide compound (1) is preferably raised in view of reducing the initial interface resistance and DCR of the battery. The ratio between the sulfonylimide compound (1) and the other electrolyte (a mole ratio between the concentration of the sulfonylimide compound and the concentration of the other electrolyte) is preferably 1:25 or more, more preferably 1:10 or more, yet more preferably 1:8 or more, still more preferably 1:5 or more, far more preferably 1:2 or more, particularly preferably 1:1 or more, and preferably 25:1 or less, more preferably 10:1 or less, yet more preferably 5:1 or less, and still more preferably 2:1 or less.

(At Least One of $CO_2$, $CO$, $HCO_3^-$, or $COs^{2-}$)

The sulfonylimide electrolyte solution that is stably stored by the storage method of the present disclosure may be an electrolyte solution containing $CO_2$ or other component dissolved in a total amount of 20 ppm by mass or more.

The present inventors have found that the battery using the non-aqueous electrolyte solution containing the sulfonylimide compound (1) (the sulfonylimide electrolyte solution) causes greater self-discharge from a fully charged state than a battery using a non-aqueous electrolyte solution containing the other electrolyte than the sulfonylimide compound (1) such as $LiPF_6$ or $LiBF_4$ alone. Specifically, the inventors have found that the battery using the sulfonylimide electrolyte solution causes greater self-discharge depending on the concentration of the sulfonylimide compound (1). As a result of intensive studies to solve the problems unique to the sulfonylimide electrolyte solution, the inventors have found that dissolving 20 ppm by mass or more of $CO_2$ or other component in the sulfonylimide electrolyte solution can reduce the self-discharge of the battery. As a result of further studies, the present inventors have found that the total amount of $CO_2$ or other component dissolved in the electrolyte solution containing $CO_2$ or other component dissolved after long-term storage (e.g., about 6 months) is maintained at 20 ppm by mass or more by the storage method of the present disclosure. This storage method reduces degeneration of the electrolyte solution containing $CO_2$ or other component dissolved due to the reduction in the amount of $CO_2$ or other component dissolved, and thus, stabilizes the improvement of the battery performance by the dissolution of $CO_2$ or other component. In other words, variations in battery performance due to the differences in storage period of the electrolyte solution containing $CO_2$ or other component dissolved are less likely to occur, and thus, the battery performance can be improved.

In this specification, $CO_2$ or other component dissolved in the non-aqueous electrolyte solution containing the sulfonylimide compound (1) means $CO_2$ or other component that is intentionally dissolved in the non-aqueous electrolyte solution, but does not exclude, for example, the $CO_2$ or other component originally contained in a raw material of the non-aqueous electrolyte solution such as an electrolyte solution solvent, or $CO_2$ or other component that is inevitably dissolved in the non-aqueous electrolyte solution in an ordinary production process of the non-aqueous electrolyte solution or the secondary battery. In other words, the total amount of dissolved $CO_2$ or other component, which will be described later, may include $CO_2$ or other component in the raw material and $CO_2$ or other component inevitably dissolved, together with $CO_2$ or other component intentionally dissolved.

$CO_2$ or other component dissolved in the non-aqueous electrolyte solution is not limited to have any particular form, and may be present in at least one of $CO_2$, $CO$, $HCO_3^-$, or $CO_3^{2-}$, i.e., in any one of the forms or two or more of the forms.

The total amount of $CO_2$ or other component dissolved in the non-aqueous electrolyte solution is 20 ppm by mass or more, preferably 50 ppm by mass or more, more preferably 100 ppm by mass or more, yet more preferably 150 ppm by mass or more, still more preferably 200 ppm by mass or more, particularly preferably 250 ppm by mass or more, in terms of the ratio to the electrolyte solution. The upper limit of the total amount of dissolved $CO_2$ or other component is not limited to a particular value, but is, for example, equal to or lower than the saturation concentration at 25°C. The total amount of dissolved $CO_2$ or other component can be measured by a method described in the following examples, for example, gas chromatography.

In this specification, the total amount of $CO_2$ or other component dissolved in the non-aqueous electrolyte solution means:

- the total amount of $CO_2$ or other component dissolved in the electrolyte solution after the preparation (just prepared) or after an optional aging period (e.g., one week) for stabilizing the amount of dissolved $CO_2$ or other component in the preparing of the non-aqueous electrolyte solution; or
- the total amount of $CO_2$ or other component dissolved in the electrolyte solution extracted from the secondary battery in, for example, a nitrogen atmosphere after the aging of the battery in the process of manufacturing the secondary battery.

Examples of the aging include the following processes and processes performed under the conditions described in the following section of Examples.

(I) After the solution is injected and the battery is partially charged, the battery is treated (stored) at a high temperature of 30°C or higher for a period of not less than 6 hours and not more than 28 days. The battery which has been degassed, resealed, and then checked to have no defects in the initial performance by charge-discharge is stored at 50% state of charge for a week or more to check that the battery has no defects caused by the self-discharge.

(II) The same process as the process (I) except that no high temperature treatment is performed after the partial charging.

(III) The same process as the process (I) except that no degassing is performed after the high temperature treatment.

Examples of the method of dissolving $CO_2$ or other component in the non-aqueous electrolyte solution containing the sulfonylimide compound (1) (dissolving) include: bringing a gas containing $CO_2$ or other component into contact with the non-aqueous electrolyte solution (liquid contacting); blowing the gas containing $CO_2$ or other component into the non-aqueous electrolyte solution (bubbling); stirring the non-aqueous electrolyte solution in a gas atmosphere containing $CO_2$ or other component (stirring); bringing a high-pressure gas containing $CO_2$ or other component into contact with the non-aqueous electrolyte solution (a method of pressurizing the gas containing $CO_2$ or other component into the non-aqueous electrolyte solution, pressurizing); and adding a substance that generates the gas containing $CO_2$ or other component to the non-aqueous electrolyte solution (adding). Examples of the substance that generates the gas containing $CO_2$ or other component include bicarbonate, carbonate, and dry ice. $CO_2$ or other component can be dissolved in an electrolyte solvent generally used for a non-aqueous electrolyte solution. Thus, the non-aqueous electrolyte solution may be prepared by dissolving the sulfonylimide compound (1) in an electrolyte solution solvent containing $CO_2$ or other component dissolved in advance. $CO_2$ or other component can be dissolved in the electrolyte solution solvent by the same method as described above. As another method, a process of introducing a non-aqueous electrolyte solution prepared in advance into a sealed container to about 1/10 of the volume of the container and filling the container with $CO_2$ or other component after the inside of the container is made almost vacuum is repeated several times to replace the air in the container with $CO_2$ or other component, and finally, the container is sealed and stored at a cool temperature for several days (replacing). The dissolving may include at least one of the above-described processes or a combination of the processes. The dissolving preferably includes at least one of the pressurizing, the liquid contacting, the bubbling, or the replacing, more preferably at least one of the pressurizing or the replacing, much more preferably a combination of the pressurizing and the replacing.

In the above method, the secondary battery may be assembled in a $CO_2$ atmosphere or an atmosphere containing $CO_2$ in view of controlling the total amount of $CO_2$ or other component dissolved in the non-aqueous electrolyte solution to be constant. Specifically, injecting the non-aqueous electrolyte solution containing $CO_2$ or other component dissolved in advance into the battery or the process after the injecting may be carried out in the $CO_2$ atmosphere or the atmosphere containing $CO_2$. Alternatively, the battery into which the electrolyte solution has been injected may be exposed to a high pressure $CO_2$ atmosphere.

The total amount of $CO_2$ or other component dissolved in the non-aqueous electrolyte solution varies depending on the temperature of the non-aqueous electrolyte solution. Thus, the temperature of the non-aqueous electrolyte solution is preferably controlled to be constant in the process of preparing the non-aqueous electrolyte solution and/or the process of manufacturing the secondary battery.

(Additives)

The non-aqueous electrolyte solution may further contain at least one selected from the group consisting of a compound represented by the general formula (4):

[Chemical 4] $M^1PO_cF_d$ (4) (where $M^1$ represents an alkali metal element, $1 \leq c \leq 3$, and $1 \leq d \leq 3$).

(this compound will be hereinafter referred to as a "fluorophosphoric acid compound (4)"). When the fluorophosphoric acid compound (4) is added to the non-aqueous electrolyte solution, the initial interface resistance and DCR of the battery are reduced. In the non-aqueous electrolyte solution containing the sulfonylimide compound (1), the combination of the sulfonylimide compound (1) and the fluorophosphoric acid compound (4) provides a synergistic effect of further reducing not only the initial interface resistance and DCR of the battery but also the self-discharge of the battery.

Examples of the alkali metal element represented by $M^1$ in the general formula (4) include lithium, sodium, potassium, rubidium, and cesium. Among them, lithium is preferable.

Examples of the fluorophosphoric acid compound (4) include lithium monofluorophosphate ($Li_2PO_3F$) and lithium difluorophosphate ($LiPO_2F_2$). These fluorophosphoric acid compounds (4) may be used alone or in combination of two or more of them. Among the examples of the fluorophosphoric acid compound (4), $LiPO_2F_2$ is preferable.

The content of the fluorophosphoric acid compound (4) in the non-aqueous electrolyte solution is preferably 0.01 mass% or more, more preferably 0.1 mass% or more, yet more preferably 0.2 mass% or more, still more preferably 0.3 mass% or more, even more preferably 0.5 mass% or more, and the upper limit of the content is preferably 3 mass% or less, more preferably 2 mass% or less, yet more preferably 1 mass% or less, in view of reducing the initial interface resistance and DCR of the battery.

(Other Components)

The non-aqueous electrolyte solution may contain other additive (an additive different from the fluorophosphoric acid compound (4)) for improving various characteristics of the lithium ion secondary battery. Examples of the additive include: carboxylic anhydrides such as succinic anhydride, glutaric anhydride, maleic anhydride, citraconic anhydride, glutaconic anhydride, itaconic anhydride, diglycolic anhydride, cyclohexane dicarboxylic anhydride, cyclopentanetetracarboxylic dianhydride, and phenylsuccinic anhydride; sulfur-containing compounds such as ethylene sulfite, 1,3-propane sultone, 1,4-butane sultone, methyl methanesulfonate, busulfan, sulfolane, sulfolen, dimethyl sulfone, tetramethylthiuram monosulfide, and trimethylene glycol sulfate; nitrogen-containing compounds such as 1-methyl-2-pyrrolidinone, 1-methyl-2-piperidone, 3-methyl-2-oxazolidinone, 1,3-dimethyl-2-imidazolidinone, and N-methylsuccinimide; saturated hydrocarbon compounds such as heptane, octane, and cycloheptane; carbonate compounds such as vinylene carbonate, fluoroethylene carbonate (FEC), trifluoropropylene carbonate, phenylethylene carbonate, and erythritan carbonate; sulfamic acid (amidosulfuric acid, $H_3NSO_3$); sulfamate salts (alkali metal salts such as lithium salts, sodium salts, and potassium salts; alkali earth metal salts such as calcium salts, strontium salts, and barium salts; other metal salts such as manganese salts, copper salts, zinc salts, iron salts, cobalt salts, and nickel salts; ammonium salts; and guanidine salts); fluorosulfonic acid compounds such as lithium fluorosulfonate (LiFSO_3), sodium fluorosulfonate (NaFSO_3), potassium fluorosulfonate (KFSO_3), and magnesium fluorosulfonate (Mg(FSO_3)_2); fluoro oxalate compounds such as lithium salts having an oxalate skeleton such as lithium bis(oxalato)borate (LiBOB), lithium difluoro(oxalato)borate (LiDFOB), lithium difluoro(oxalato)phosphate (LIDFOP), lithium tetrafluoro(oxalato)phosphate (LITFOP), lithium difluorobis(oxalato)phosphate (LiDFBOP), and lithium tris(oxalato)phosphate. The other additives may be used alone or in combination of two or more of them.

The other additive is preferably used in the range from 0.1 mass% to 10 mass%, more preferably in the range from 0.2 mass% to 8 mass%, yet more preferably in the range from 0.3 mass% to 5 mass%, with respect to 100 mass% of the non-aqueous electrolyte solution. When the amount of the other additive used is too small, it may be difficult for the other additive to exhibit its effect. On the other hand, when the amount of the other additive used is large, it is also difficult for the other additive to exhibit its effect corresponding to the amount added, and the non-aqueous electrolyte solution may become more viscous, lowering the electrical conductivity.

(Electrolyte Solution Solvent)

The non-aqueous electrolyte solution may contain an electrolyte solution solvent. The electrolyte solution solvent is not limited to particular solvents and may be any kind of electrolyte solution solvent that can dissolve and disperse the electrolyte salt. Examples of the electrolyte solution solvent include non-aqueous solvents and media such as a polymer and polymer gel that can be a substitute for the electrolyte solution solvent. Any solvents that are generally used for batteries can be used.

Suitable examples of the non-aqueous solvents include a solvent that has a large dielectric constant and a boiling point of 60°C or higher, dissolves the electrolyte salt well, and is electrochemically stable in a wide range. An organic solvent having a low water content is more preferable. Examples of the organic solvent include: ether solvents such as ethylene glycol dimethyl ether, ethylene glycol diethyl ether, tetrahydrofuran, 2-methyltetrahydrofuran, 2,6-dimethyltetrahydrofuran, tetrahydropyran, crown ethers, triethylene glycol dimethyl ether, tetraethylene glycol dimethyl ether, 1,4-dioxane, and 1,3-dioxolane; chain carbonate ester (carbonate) solvents such as dimethyl carbonate, ethyl methyl carbonate, diethyl carbonate, diphenyl carbonate, and methylphenyl carbonate; saturated cyclic carbonate solvents such as ethylene carbonate, propylene carbonate, 2,3-dimethyl ethylene carbonate, 1,2-butylene carbonate, and erythritan carbonate; cyclic carbonate ester solvents having an unsaturated bond such as vinylene carbonate, methyl vinylene carbonate, ethyl vinylene carbonate, 2-vinyl ethylene carbonate, and phenylethylene carbonate; fluorine-containing cyclic carbonate ester solvents such as fluoroethylene carbonate, 4,5-difluoroethylene carbonate, and trifluoropropylene carbonate; aromatic carboxylic acid ester solvents such as methyl benzoate and ethyl benzoate; lactone solvents such as $\gamma$-butyrolactone, $\gamma$-valerolactone, and $\delta$-valerolactone; phosphoric acid ester solvents such as trimethyl phosphate, ethyl dimethyl phosphate, diethyl methyl phosphate, and triethyl phosphate; nitrile solvents such as acetonitrile, propionitrile, methoxypropionitrile, glutaronitrile, adiponitrile, 2-methylglutaronitrile, valeronitrile, butyronitrile, and isobutyronitrile; sulfur compound solvents such as dimethyl sulfone, ethyl methyl sulfone, diethyl sulfone, sulfolane, 3-methylsulfolane, and 2,4-dimethylsulfolane; aromatic nitrile solvents such as benzonitrile and tolunitrile; nitromethane; 1,3-dimethyl-2-imidazolidinone; 1,3-dimethyl-3,4,5,6-tetrahydro-2(1H)-pyrimidinone; 3-methyl-2-oxazolidinone; and chain ester solvents such as ethyl acetate, butyl acetate, and propyl propionate. These solvents may be used alone or in combination of two or more of them.

Among the electrolyte solution solvents, the carbonate solvents such as the chain carbonate ester solvents and the cyclic carbonate ester solvents, the lactone solvents, the ether solvents, and the chain ester solvents are preferable, dimethyl carbonate, ethyl methyl carbonate, diethyl carbonate, ethylene carbonate, propylene carbonate, $\gamma$-

butyrolactone, and $\gamma$-valerolactone are more preferable, and the carbonate solvents such as dimethyl carbonate, ethyl methyl carbonate, diethyl carbonate, ethylene carbonate, and propylene carbonate are much more preferable.

The polymer or the polymer gel can be used instead of the electrolyte solution solvent by the following method. Examples of the method include: a method of dropping a solution prepared by dissolving an electrolyte salt in a solvent onto a polymer film formed by a known method to impregnate the polymer film with the electrolyte salt and the non-aqueous solvent so that the polymer film supports the electrolyte salt and the non-aqueous solvent; a method of melting and mixing a polymer and an electrolyte salt at a temperature higher than the melting point of the polymer, forming the mixture into a film, and impregnating the film with a solvent (gel electrolytes are formed by these methods); a method of mixing a non-aqueous electrolyte solution prepared by dissolving an electrolyte salt in an organic solvent in advance with a polymer, forming the mixture into a film by casting or coating, and volatilizing the organic solvent; and a method of molding a mixture obtained by melting and mixing a polymer and an electrolyte salt at a temperature higher than the melting point of the polymer (intrinsic polymer electrolytes are formed by these methods).

Examples of the polymer used as a substitute for the electrolyte solution solvent include polyethylene oxide (PEO) that is a homopolymer or copolymer of an epoxy compound (such as ethylene oxide, propylene oxide, butylene oxide, and allyl glycidyl ether), polyether polymers such as polypropylene oxide, methacrylic polymers such as polymethylmethacrylate (PMMA), nitrile polymers such as polyacrylonitrile (PAN), fluorine polymers such as polyvinylidene fluoride (PVdF), polyvinylidene fluoride-hexafluoropropylene, and copolymers thereof. These polymers may be used alone or in combination of two or more of them.

The non-aqueous electrolyte solution described above (the electrolyte solution containing $CO_2$ or other component dissolved) is used, for example, for a battery (a battery having a charge-discharge mechanism) and a power storage (electrochemical) device (or an ion conductive material constituting such a device). Specifically, the electrolyte solution can be used as an electrolyte solution constituting, for example, a primary battery, a secondary battery (e.g., a lithium (ion) secondary battery), a fuel battery, an electrolytic capacitor, an electric double layer capacitor, a solar battery, and an electrochromic display device. A battery (especially a secondary battery) will be described below as an example.

<Secondary Battery>

A secondary battery of the present embodiment includes a positive electrode, a negative electrode, and a non-aqueous electrolyte solution. This secondary battery uses an electrolyte solution containing $CO_2$ or other component dissolved as the non-aqueous electrolyte solution.

(Positive Electrode)

The positive electrode includes a positive electrode current collector and a positive electrode mixture layer formed on the positive electrode current collector and is usually in a sheet shape.

Examples of metal used for the positive electrode current collector include iron, copper, aluminum, nickel, stainless steel, titanium, tantalum, gold, and platinum. Among them, aluminum is preferable. The shape and size of the positive electrode current collector are not limited to particular ones.

The positive electrode mixture layer is made of a positive electrode mixture (a positive electrode composition). The positive electrode mixture contains components such as a positive electrode active material, a conductivity aid, a binder, and a solvent dispersing these components.

In the secondary battery according to the present embodiment, the positive electrode (positive electrode mixture) used is suitably a ternary positive electrode active material such as $LiNi_{1/3}Co_{1/3}Mn_{1/3}O_2$, $LiNi_{0.5}Co_{0.2}Mn_{0.3}O_2$, $LiNi_{0.6}Co_{0.2}Mn_{0.2}O_2$, and $LiNi_{0.8}Co_{0.1}Mn_{0.1}O_2$; or an iron phosphate positive electrode active material having an olivine structure such as $LiFePO_4$ and $LiFe_{0.995}Mn_{0.005}PO_4$. These positive electrode active materials may be used alone or in combination of two or more of them.

The positive electrode preferably contains at least one of the ternary positive electrode active material or the iron phosphate positive electrode active material, but may further contain other positive electrode active material. The other positive electrode active material may be any material that can absorb and desorb various ions (such as lithium ions and sodium ions). For example, a positive electrode active material used in a known secondary battery (a lithium ion secondary battery or a sodium ion secondary battery) can be used.

Examples of the positive electrode active material used for the lithium ion secondary battery include: transition metal oxides such as lithium cobalt oxide, lithium nickel oxide, lithium manganese oxide, and ternary oxides represented by $LiNi_{1-v-w}Co_xAl_yO_2$ ($0 \le v \le 1$, $0 \le w \le 1$) other than the ternary positive electrode active materials; compounds having an olivine structure such as $LiAPO_4$ (A represents Mn, Ni, or Co); solid solution materials incorporating two or more transition metals (such as a solid solution of electrochemically inactive layered $Li_2MnO_3$ and electrochemically active layered $LiMO_2$ (M represents a transition metal such as Co and Ni); $LiCo_xMn_{1-x}O_2$ ($0 \le x \le 1$); $LiNi_xMn_{1-x}O_2$ ($0 \le x \le 1$); compounds having a fluorinated olivine structure such as $Li_2APO_4F$ (A represents Fe, Mn, Ni, or Co); and sulfur. These may be used alone or in combination of two or more of them.

Examples of the positive electrode active material used for the sodium ion secondary battery include $NaNiO_2$, $NaCoO_2$, $NaMnO_2$, $NaVO_2$, $NaFeO_2$, $Na(Ni_XMn_{1-X})O_2$ (0 < X < 1), $Na(Fe_XMn_{1-X})O_2$ (0 < X < 1), $NaVPO_4F$, $Na_2FePO_4F$, and $Na_3V_2(PO_4)_3$. These may be used alone or in combination of two or more of them.

Among the other positive electrode active materials, in particular, a positive electrode active material capable of absorbing and desorbing lithium ions may be suitably used. Such a positive electrode active material is used, for example, in a lithium ion secondary battery using a non-aqueous electrolyte solution. Such a non-aqueous system usually has a lower ion conductivity than an aqueous system. However, the present disclosure can efficiently improve the discharge capacity of the non-aqueous system.

The content of the positive electrode active material (the total content if two or more positive electrode active materials are contained) is preferably 75 mass% or more, more preferably 85 mass% or more, yet more preferably 90 mass% or more, and preferably 99 mass% or less, more preferably 98 mass% or less, yet more preferably 95 mass% or less, with respect to 100 mass% of the total amount of the components contained in the positive electrode mixture material in view of improving the output characteristics and electrical characteristics of the secondary battery.

The conductivity aid is used to improve the output of the lithium ion secondary battery. Conductive carbon is mainly used as the conductivity aid. Examples of the conductive carbon include carbon black, fiber-like carbon, and graphite. These conductivity aids may be used alone or in combination of two or more of them. Among the conductivity aids, carbon black is preferable. Examples of the carbon black include Ketjen black and acetylene black. In the nonvolatile content of the positive electrode mixture, the conductivity aid is preferably contained in an amount of 1 mass% to 20 mass%, more preferably 1.5 mass% to 10 mass%, in view of improving the output characteristics and electrical characteristics of the lithium ion secondary battery.

Examples of the binder include: fluorine-based resins such as polyvinylidene fluoride and polytetrafluoroethylene; synthetic rubbers such as styrene-butadiene rubber and nitrile-butadiene rubber; polyamide-based resins such as polyamide-imide; polyolefin-based resins such as polyethylene and polypropylene; poly(meth)acrylic resins; polyacrylic acids; and cellulose-based resins such as carboxymethyl cellulose. The binders may be used alone or in combination of two or more of them. These binders may be dissolved or dispersed in a solvent in use.

Examples of the solvent include N-methylpyrrolidone, dimethylformamide, dimethylacetamide, methyl ethyl ketone, tetrahydrofuran, acetonitrile, acetone, ethanol, ethyl acetate, and water. These solvents may be used alone or in combination of two or more of them. The amount of the solvent used is not limited to a particular value, and may be determined as appropriate in accordance with the manufacturing method and the material used.

If necessary, the positive electrode mixture may also contain other component, for example: polymers including non-fluorine polymers such as a (meth)acrylic polymer, a nitrile polymer, and a diene polymer, and fluorine polymers such as polytetrafluoroethylene; emulsifiers such as an anionic emulsifier, a nonionic emulsifier, and a cationic emulsifier; dispersing agents including polymer dispersing agents such as a styrene-maleic acid copolymer and polyvinylpyrrolidone; thickeners such as carboxymethyl cellulose, hydroxyethyl cellulose, polyvinyl alcohol, polyacrylic acid (salt), and an alkali-soluble (meth)acrylic acid-(meth)acrylic acid ester copolymer; and a preservative. In the nonvolatile content of the positive electrode mixture, the other component is preferably contained in an amount of 0 mass% to 15 mass%, more preferably 0 mass% to 10 mass%.

The positive electrode mixture can be prepared, for example, by mixing the positive electrode active material, the conductivity aid, the binder, the solvent, and the optional other component, and dispersing the mixture using a beads mill, a ball mill, or an agitating mixer.

The positive electrode may be formed (coated) by any method. Examples of the method include: (1) a method of applying the positive electrode mixture to the positive electrode current collector (followed by drying) by a common coating method (e.g., a doctor blade method); (2) a method of immersing the positive electrode current collector in the positive electrode mixture (followed by drying); (3) a method of joining a sheet made of the positive electrode mixture to the positive electrode current collector (e.g., with a conductive adhesive) and pressing (and drying) the sheet; (4) a method of applying or casting the positive electrode mixture to which a liquid lubricant has been added onto the positive electrode current collector, forming the positive electrode mixture into a desired shape, and then removing the liquid lubricant (followed by extending the product uniaxially or multiaxially); and (5) a method of making the positive electrode mixture (or a solid content forming the positive electrode mixture layer) into slurry with an electrolyte solution, transferring the slurry in a semi-solid state to a current collector (the positive electrode current collector), and using the positive electrode mixture as an electrode (the positive electrode) without drying.

The positive electrode mixture layer thus formed or coated (applied) may be dried or pressed, if necessary.

(Negative Electrode)

The negative electrode includes a negative electrode current collector and a negative electrode mixture layer formed on the negative electrode current collector and is usually formed into a sheet shape.

Examples of metal used for the negative electrode current collector include iron, copper, aluminum, nickel, stainless steel (SUS), titanium, tantalum, gold, and platinum. Among them, copper is preferable. The shape and size of the negative electrode current collector are not limited to particular ones.

The negative electrode mixture layer is made of a negative electrode mixture (a negative electrode composition). The negative electrode mixture contains components such as a negative electrode active material, a conductivity aid, a binder, and a solvent dispersing these components.

The negative electrode active material may be any known negative electrode active material used for various batteries (e.g., a lithium secondary battery) as long as the material can absorb and desorb ions (e.g., lithium ions). A specific negative electrode active material can be graphite materials such as artificial graphite and natural graphite, a mesophase calcined body made from coal or petroleum pitches, carbon materials such as non-graphitizable carbon, a Si-based negative electrode material such as Si, a Si alloy, and SiO, a Sn-based negative electrode material such as a Sn alloy, and lithium alloys such as a lithium metal and a lithium-aluminum alloy. These negative electrode active materials may be used alone or in combination of two or more of them.

The negative electrode mixture may further include a conductivity aid (conductive material), a binder, a solvent, or the like. As the conductivity aid, the binder, and the solvent, the same components as those described above can be used. These components are used in the same proportion as described above.

The negative electrode may be produced in the same manner as the positive electrode.

(Separator)

The secondary battery may include a separator. The separator is disposed to separate the positive electrode and the negative electrode from each other. The separator is not limited to a particular one, and any known separator can be used in the present disclosure. Specific examples of the separator include a porous sheet (e.g., a polyolefin-based microporous separator and a cellulose-based separator) formed of a polymer capable of absorbing and retaining an electrolyte solution (non-aqueous electrolyte solution), a nonwoven fabric separator, and a porous metal body.

Examples of the material of the porous sheet include polyethylene, polypropylene, and a laminate having a three layer structure of polypropylene, polyethylene, and polypropylene.

Examples of the material of the nonwoven fabric separator include cotton, rayon, acetate, nylon, polyester, polypropylene, polyethylene, polyimide, aramid, and glass. These materials may be used alone or in combination of two or more of them, depending on the required mechanical strength.

(Battery Housing)

A battery element including the positive electrode, the negative electrode, and the non-aqueous electrolyte solution (and the separator) is usually contained in a battery housing to protect the battery element from external shock and environmental degradation when the battery is in use. The battery housing is made of any material, and any known battery housing can be used.

If necessary, an expanded metal, a fuse, an overcurrent protection element such as a PTC element, or a lead plate may be placed in the battery housing to avoid an increase in internal pressure of the battery and excessive charge/discharge.

The battery (the lithium ion secondary battery) is not limited to have a particular shape, and may have any known shape of the battery (the lithium ion secondary battery) such as a cylindrical shape, a rectangular shape, a laminate shape, a coin shape, and a large shape. In use as a high-voltage (e.g., tens to hundreds of volts) power supply to be mounted in an electric vehicle or a hybrid electric vehicle, for example, individual batteries may be connected in series into a battery module.

The rated charging voltage of the secondary battery (such as the lithium ion secondary battery) is not limited to a particular value, and may be 3.6 V or more, preferably 4.0 V or more, more preferably 4.1 V or more, yet more preferably 4.2 V or more, when the secondary battery includes a positive electrode mainly containing the ternary positive electrode active material. Although the energy density increases as the rated charging voltage increases, the rated charging voltage may be 4.6 V or less (e.g., 4.5 V or less) in view of safety.

<Method of Manufacturing Secondary Battery>

The secondary battery of the present embodiment can be easily manufactured, for example, by joining a positive electrode and a negative electrode (with a separator interposed therebetween, if necessary), placing the obtained laminate in a battery housing, injecting a non-aqueous electrolyte solution into the battery housing, and sealing the battery housing.

<Effects>

The method for storing a non-aqueous electrolyte solution of the present disclosure provides the following effects.

- When the electrolyte solution containing $CO_2$ or other component dissolved is stored in the sealed container, the sealed container is kept slightly pressurized by the $CO_2/CO$-containing gas to keep the amount of dissolved $CO_2$ or other component from decreasing during storage.
- Although an electrolyte solution dissolving $CO_2$ or other component and being stored for a different storage period is used, a battery can effectively and stably reduce the initial interface resistance and the DCR, improve the charge-discharge cycles, and reduce the self-discharge during high-temperature storage, due to $CO_2$ or other component dissolved in the electrolyte solution. In other words, variations in battery performance and storage characteristics, such as low-temperature input/output characteristics and charge-discharge cycle characteristics, are reduced, improving the battery quality.

EXAMPLES

The present disclosure will be described below by way of examples. The present disclosure is not limited to the following Examples. The following Examples can be modified and changed based on the spirit of the present disclosure, and are not excluded from the scope of the present disclosure.

<Example 1 Series>

(Example 1)

[Preparation of Non-Aqueous Electrolyte Solution]

LiFSI (manufactured by Nippon Shokubai Co., Ltd.) was dissolved as an electrolyte salt in dimethyl carbonate (DMC, manufactured by Kishida Chemical Co., Ltd.) used as an electrolyte solution solvent to prepare a non-aqueous electrolyte solution having a LiFSI concentration of 40 mass% [a sulfonylimide electrolyte solution (an electrolyte solution containing no $CO_2$ or other component dissolved)].

[Storage of Non-aqueous Electrolyte Solution]

The sulfonylimide electrolyte solution obtained above was transferred to an eggplant flask, and the flask was evacuated to 40 mmHg with a vacuum pump. Then, $CO_2$ was supplied to fill the flask. This process was repeated three times to replace the inside of the flask with $CO_2$. The eggplant flask was transferred to a glove bag filled with $CO_2$, and the sulfonylimide electrolyte solution was introduced into a PFA (fluorine-based resin) container. The PFA container was sealed and packaged in an aluminum laminate zipper bag, and the sealed container with a $CO_2$ atmosphere inside [a volume ratio (a space volume ratio) of a gas phase part to a liquid phase part (sulfonylimide electrolyte solution) was 40%] was taken out of the glove bag.

At this time, the concentration of $CO_2$ in the gas phase part in the sealed container was adjusted to the value shown in Table 1 below (initial $CO_2$ concentration, target value), and the pressure in the sealed container was adjusted to the value shown in Table 1 (internal pressure of the container, target value). The series of processes makes the gas composition in the glove bag the same as the gas composition in the sealed container. Thus, the $CO_2$ concentration in the gas phase part in the sealed container was determined by sampling the air in the glove bag during operation in a collection bag, diluting the air five times with $N_2$ gas, and then analyzing the diluted air with gas detector tubes [product names: No. 2H ($CO_2$ concentration < 10%) and No. 2HH ($CO_2$ concentration $\geq$ 10%), manufactured by GASTEC Corporation]. The internal pressure of the container was checked with a pressure gauge attached to the sealed container. This process and measurement were performed at room temperature (about 25°C) and normal pressure.

Finally, the sulfonylimide electrolyte solution was stored in the sealed container in a thermostatic bath at 40°C for three months with the $CO_2$ concentration in the gas phase part in the sealed container and the internal pressure of the container maintained.

[Evaluation of Non-aqueous Electrolyte Solution]

The water content (water concentration), ion concentrations, and pH of the non-aqueous electrolyte solution were measured before and after the storage by the methods described below. Table 1 shows the results. In Table 1, the unit "%" of the $CO_2$ concentration in the gas phase part means "vol%," the unit "%" of the LiFSI concentration means "mass%," and the unit "ppm" means "ppm by mass."

[Measurement of Water Content]

The water content of the non-aqueous electrolyte solution was measured using a Karl Fischer Titrator AQ-2000 (manufactured by HIRANUMA Co., Ltd.), with Aqualyte RS-A (manufactured by HIRANUMA Co., Ltd.) as a generator solution and Aqualyte CN (manufactured by HIRANUMA Co., Ltd.) as a counter solution.

[Measurement by Ion Chromatography]

The non-aqueous electrolyte solution was diluted 100 folds with ultrapure water (more than 18.2 $\Omega$·cm) to prepare a measurement solution, and the concentrations of fluoride ion ($F^-$), amidosulfate ion ($H_2NSO_3^-$), and sulfate ion ($SO_4^{2-}$) contained in the non-aqueous electrolyte solution were measured using an ion chromatography system ICS-3000 (manufactured by Nippon Dionex K. K.). The measurement was performed under the following conditions.

(Conditions of Measurement by Ion Chromatography)

Separation mode: Ion exchange
Eluent: 7 mM to 18 mM KOH aqueous solution
Detector: Electric conductivity detector
Column: Anion analysis column Ion PAC AS-17C (manufactured by Nippon Dionex K. K.)

[Measurement of pH]

The non-aqueous electrolyte solution was diluted 10 folds with a mixture solution of methanol (special grade reagent; manufactured by FUJIFILM Wako Pure Chemical Corporation) and ultrapure water (more than 18.2 $\Omega$·cm) in a ratio of 1:8 to prepare a measurement solution, and the pH of the non-aqueous electrolyte solution was measured using an automatic titrator COM-1700A (manufactured by HIRANUMA Co., Ltd.).

(Example 2)

The non-aqueous electrolyte solution was stored in the sealed container and evaluated in the same manner as in Example 1 except that the non-aqueous electrolyte solution was introduced into the PFA container in the glove bag filled with $CO_2$, and then bubbling was performed for 10 minutes by blowing a $CO_2$ gas into the container. Table 1 shows the results.

(Comparative Example 1)

A non-aqueous electrolyte solution was prepared in the same manner as in Example 1 and placed in a PFA container in a dry room (temperature: 25°C, dew point: -70°C to -50°C). The PFA container with a dry air atmosphere inside was sealed and packaged in an aluminum laminate zipper bag. The volume ratio (the space volume ratio) of the gas phase part to the liquid phase part (the sulfonylimide electrolyte solution) was 40%.
At this time, the pressure in the sealed container was adjusted to the value shown in Table 1 (internal pressure of the container, target value). The internal pressure of the container was checked with a pressure gauge attached to the sealed container. Further, the air in the dry room during operation was sampled, and the $CO_2$ concentration in the gas phase part was measured by the gas detection tube. This process and measurement were performed at room temperature (about 25°C) and normal pressure.
Finally, the non-aqueous electrolyte solution was stored in the sealed container and evaluated in the same manner as in Example 1. Table 1 shows the results.

[Table 1]

| Example 1 series | | Storage atmosphere (gas phase part) | $CO_2$ concentration in gas phase part | Internal pressure of container [MPa] | Period [Month] | LiFSI Concentration | Water content [ppm] | Fluoride ion concentration [ppm] | Amidosulfuric acid ion concentration [ppm] | Sulfate ion concentration [ppm] | pH |
|---|---|---|---|---|---|---|---|---|---|---|---|
| Example | 1 | $CO_2$ | 98% | 0.10 | 0 | 40% | 24 | 27 | 0 | 2 | 6 |
| | | | | | 3 | 40% | 66 | 24 | 0 | 0 | 6 |
| | 2 | $CO_2$ | 99% | 0.10 | 0 | 40% | 24 | 27 | 0 | 2 | 7 |
| | | | | | 3 | 40% | 59 | 25 | 0 | 0 | 6 |
| Comparative Example | 3 | Dry Air | 0% | 0.10 | 0 | 40% | 19 | 19 | 0 | 0 | 7 |
| | | | | | 3 | 40% | 3 | 72 | 200 | 36 | 4 |

The results shown in Table 1 indicate that no remarkable increase in ion concentrations was observed in the non-aqueous electrolyte solutions of Examples stored in an atmosphere (the gas phase part of the sealed container) containing 10% or more of $CO_2$ at 40°C for three months. On the other hand, the non-aqueous electrolyte solution stored in an atmosphere containing dry air alone and free from $CO_2$ showed significant increase of all of the concentrations of the fluoride ion, the amidosulfate ion, and the sulfate ion during the storage. This non-aqueous electrolyte solution decreased in the water content at the same time, suggesting that hydrolysis of LiFSI caused the increase of the ion concentrations. During a long term storage of the non-aqueous electrolyte solution, water contained in the non-aqueous electrolyte solution triggers the hydrolysis of LiFSI. However, it was found that a $CO_2$ atmosphere created in the gas phase part in the storage container can reduce the decomposition of LiFSI, although the water content after the storage exceeds 50 ppm by mass.

<Example 2 Series>

[Preparation of Non-Aqueous Electrolyte Solution]

In a mixture solvent of ethylene carbonate (EC) and ethyl methyl carbonate (EMC) in a volume ratio of 3:7 (manufactured by Kishida Chemical Co., Ltd.) used as an electrolyte solution solvent, an electrolyte salt of a mixed salt composition containing LiFSI (manufactured by Nippon Shokubai Co., Ltd.) and $LiPF_6$ (manufactured by Stella Chemifa Corporation) or an electrolyte salt of a simple salt composition containing $LiPF_6$ alone was dissolved in concentrations shown in Table 2 to prepare non-aqueous electrolyte solutions. In Examples 7, 8, and 10 and Comparative Examples 4 and 6, lithium difluorophosphate ($LiPO_2F_2$) was further added in the content shown in Table 2 to the non-aqueous electrolyte solution.

In the following description, a non-aqueous electrolyte solution that does not intentionally dissolve $CO_2$ or other component will be referred to as a "reference electrolyte solution." This reference electrolyte solution was obtained without performing the dissolving (before the dissolving was performed), and may contain $CO_2$ or other component originally contained in the raw material or $CO_2$ or other component which was inevitably dissolved in the solution.

[Dissolving of $CO_2$ into Non-aqueous Electrolyte Solution (Dissolving: Pressurizing and Replacing)]

Each reference electrolyte solution obtained above was put into a sealed bottle to about 1/10 of the volume of the bottle. The bottle was allowed to stand in an autoclave with an opening of the bottle facing up in an opened state, and then the autoclave was pressurized to 0.5 MPa with $CO_2$. Then, a release valve was half opened to lower the pressure in the autoclave to 0.1 MPa (1 atm). This process was repeated three times to replace the air in the autoclave with $CO_2$. After the replacement, the autoclave was pressurized again to 0.5 MPa with $CO_2$, and the bottle was left to stand for 30 minutes. The electrolyte solution left to stand for 30 minutes was taken out of the autoclave, and left to stand again in a sealed state at 24°C for two weeks.

[Quantitative Determination of Amount of $CO_2$ Dissolved in Electrolyte Solution]

The $CO_2$ dissolving electrolyte solution obtained above was analyzed by gas chromatography to quantitatively determine the amount of $CO_2$ dissolved in the electrolyte solution (the initial amount of $CO_2$ dissolved).

The amount of $CO_2$ dissolved in the non-aqueous electrolyte solution was determined by gas chromatography (gas chromatograph: GC-2010plus, manufactured by Shimadzu Corporation, column: Micropacked-ST manufactured by and Shinwa Chemical Industries, Ltd.) by the following method.

(Measurement Conditions for Gas Chromatography)

For the measurement by gas chromatography, the non-aqueous electrolyte solution was directly fed into the gas chromatograph purged with nitrogen (in a nitrogen atmosphere) to block atmospheric air from entering the measurement system. The measurement by the gas chromatography was performed under the following conditions.

Column temperature program: the column temperature was kept at 37°C (for 2.5 minutes from the start), raised from 37°C to 250°C (at a rate of 20°C/min), raised from 250°C to 270°C (at a rate of 15°C/min), and kept at 270°C (for 5.42 minutes)

- Temperature of vaporization chamber: 130°C
- Temperature of detector: 300°C (BID)
- Carrier Gas: helium (flow rate in column: 1.33 mL/min)
- Injection amount: 1 $\mu$L (split method, split ratio: 5.0)

(Method of Quantitatively Determining Amount of Dissolved $CO_2$)

Multiple kinds of standard helium gas each mixed with $CO_2$ in a known mixing ratio were analyzed under the same measurement conditions as the conditions for the gas chromatography described above except that the injection amount (1 μL) was changed to 1 mL, and a calibration curve showing the relationship between the amount of mixed (dissolved) $CO_2$ and a peak area of $CO_2$ gas was generated from the obtained peak area of the $CO_2$ gas. Subsequently, the non-aqueous electrolyte solutions obtained in the Examples and the Comparative Examples were analyzed by gas chromatography. Finally, the amount of $CO_2$ dissolved in each of the electrolyte solutions was determined by the external standard method.

[Storage of Non-aqueous Electrolyte Solution]

Each of the CO2 dissolving electrolyte solutions obtained above was injected to fill a SUS316 sealed bottle (the sealed container, the volume ratio (the space volume ratio) of the gas phase part to the liquid phase part (CO2 dissolved electrolyte) was 10%), and then $CO_2$ gas was injected into the sealed bottle so that the gas phase part in the sealed bottle had the $CO_2$ concentration shown in Table 2 (initial $CO_2$ concentration, target value). Subsequently, $N_2$ gas was injected into the sealed bottle so that the sealed bottle had the pressure shown in Table 2 (internal pressure of the container, target value). The $CO_2$ concentration in the gas phase part was analyzed by the method described below. The internal pressure of the container was checked with a pressure gauge attached to the sealed container. This process and measurement were performed at room temperature (about 25°C) and normal pressure. Finally, the non-aqueous electrolyte solution was stored in the sealed container at 25°C for six months with the $CO_2$ concentration of the gas phase part in the sealed bottle and the internal pressure of the container maintained.

[Gas Analysis of Gas Phase Part]

For the determination of the initial $CO_2$ concentration in the gas phase part in the sealed bottle, the gas in the gas phase part was sampled in a collection bag through a vent at the top of the bottle after the $CO_2$ concentration in the gas phase part and the pressure in the sealed bottle were adjusted by the above method, and then the gas was analyzed with detector tubes (product names: No. 2H ($CO_2$ concentration < 10%) and No. 2HH ($CO_2$ concentration ≥ 10%), manufactured by GASTEC Corporation). The gas sample was diluted with $N_2$ gas as needed. The $CO_2$ concentration after storage was analyzed by sampling the gas in the same manner as described above before the electrolyte solution dissolving $CO_2$ was taken out of the sealed container after storage.
Table 2 shows the salt compositions of the non-aqueous electrolyte solutions, the additives, the amounts of $CO_2$ dissolved in the non-aqueous electrolyte solutions before and after storage (initial concentration and concentration after storage), the concentrations of $CO_2$ in the gas phase part in the sealed bottle before and after storage (initial concentration and concentration after storage), and the internal pressures of the sealed bottle before and after storage (initial pressure and pressure after storage). In Table 2, the unit "ppm" means "ppm by mass," and the unit "%" of the $CO_2$ concentration in the gas phase part means "vol%."

[Table 2]

| Example 2 series | | Non-aqueous electrolyte solution | | | | | Sealed bottle | | | |
| | | Salt composition | | Additive | Amount of $CO_2$ dissolved | | $CO_2$ concentration in gas phase part | | Internal pressure of container [MPa] | |
| | | LiPF$_6$ | LiFSI | | Initial | After storage | Initial | After storage | Initial | After storage |
|---|---|---|---|---|---|---|---|---|---|---|
| Example | 1 | 0.6 M | 0.6 M | - | 22 ppm | 22 ppm | 10% | 10% | 0.1013 | 0.1013 |
| | 2 | 0.6 M | 0.6 M | - | 21 ppm | 21 ppm | 30% | 31% | 0.1013 | 0.1013 |
| | 3 | 0.6 M | 0.6 M | - | 23 ppm | 25 ppm | 50% | 49% | 0.1013 | 0.1013 |
| | 4 | 0.6 M | 0.6 M | - | 22 ppm | 31 ppm | 100% | 100% | 0.1013 | 0.1013 |
| | 5 | 0.6 M | 0.6 M | - | 22 ppm | 32 ppm | 100% | 99% | 0.1115 | 0.1115 |
| | 6 | 0.6 M | 0.6 M | - | 23 ppm | 35 ppm | 100% | 99% | 0.2027 | 0.2027 |
| | 7 | 0.6 M | 0.6 M | 0.5 mass% $LiPO_2F_2$ | 22 ppm | 28 ppm | 50% | 52% | 0.1013 | 0.1013 |
| | 8 | 0.6 M | 0.6 M | 0.5 mass% $LiPO_2F_2$ | 23 ppm | 29 ppm | 100% | 100% | 0.1013 | 0.1013 |
| | 9 | 1.2 M | - | - | 20 ppm | 21 ppm | 50% | 52% | 0.1013 | 0.1013 |
| | 10 | 1.2 M | - | 0.5 mass% $LiPO_2F_2$ | 21 ppm | 23 ppm | 50% | 51% | 0.1013 | 0.1013 |
| Comparative Example | 1 | 0.6 M | 0.6 M | - | 20 ppm | 10 ppm | 0% | 1% | 0.1013 | 0.1013 |
| | 2 | 0.6 M | 0.6 M | - | 21 ppm | 14 ppm | 7% | 7% | 0.1013 | 0.1013 |
| | 3 | 0.6 M | 0.6 M | - | 23 ppm | 14 ppm | 7% | 8% | 0.2027 | 0.2027 |
| | 4 | 0.6 M | 0.6 M | 0.5 mass% $LiPO_2F_2$ | 21 ppm | 9 ppm | 0% | 0% | 0.1013 | 0.1013 |
| | 5 | 1.2 M | - | - | 22 ppm | 13 ppm | 7% | 7% | 0.1013 | 0.1013 |
| | 6 | 1.2 M | - | 0.5 mass% $LiPO_2F_2$ | 20 ppm | 9 ppm | 0% | 1% | 0.1013 | 0.1013 |

[Preparation of Laminate Battery]

Next, batteries were produced using the non-aqueous electrolyte solutions after storage and evaluated.

(Preparation of Positive Electrode)

Acetylene black (AB, product name: Denka Black (registered trademark), manufactured by Denka Co., Ltd.), graphite (product number: SP270, manufactured by Nippon Graphite Industries, Co., Ltd.), and polyvinylidene fluoride (PVdF, product number: KF1120, manufactured by Kureha Corporation) were weighed, 3 parts by weight each, with respect to 100 parts by weight of $LiNi_{1/3}Co_{1/3}Mn_{1/3}O_2$ (product number: MX7h, manufactured by Umicore) used as the ternary positive electrode active material, and were dispersed in N-methyl-2-pyrrolidone (NMP) to prepare positive electrode mixture slurry.

The obtained positive electrode mixture slurry was coated on one side of aluminum foil (a positive electrode current collector, manufactured by Nippon Foil Co., Ltd., thickness: 15 $\mu$m) with an applicator so that the coated slurry after drying weighed 19.4 mg/cm$^2$ and dried on a hot plate at 110°C for 10 minutes. The obtained product was further dried in a vacuum drying furnace at 110°C for 12 hours. Thereafter, the dried product was pressure-molded by a roll press to a density of 3.1 g/cm$^3$ to obtain a positive electrode sheet (83 $\mu$m in thickness).

(Preparation of Negative Electrode)

Acetylene black (AB, product name: Denka Black (registered trademark), manufactured by Denka Co., Ltd.) weighed 2 parts by weight, styrene-butadiene rubber (SBR, binder) weighed 1 part by weight, and carboxymethyl cellulose (CMC, binder) weighed 1 part by weight, with respect to 100 parts by weight of graphite (natural graphite (product number: SMG, manufactured by Hitachi Chemical Co., Ltd.) used as the negative electrode active material, were dispersed in ultrapure water to prepare negative electrode mixture slurry. The obtained negative electrode mixture slurry was coated on one side of copper foil (a negative electrode current collector, manufactured by Fukuda Metal Foil & Powder Co., Ltd., thickness: 15 $\mu$m) with an applicator so that the coated slurry after drying weighed 9.8 mg/cm$^2$ and dried on a hot plate at 80°C for 10 minutes. The obtained product was further dried in a vacuum drying furnace at 100°C for 12 hours. Thereafter, the dried product was pressure-molded by a roll press to have a density of 1.3 g/cm$^3$ to obtain a negative electrode sheet (113 $\mu$m in thickness).

(Preparation of Laminate Battery)

The obtained positive and negative electrodes were cut, and polar leads were ultrasonically welded to the cut positive and negative electrodes. Then, the positive and negative electrodes were disposed to face each other with a 16-$\mu$m polyethylene (PE) separator interposed therebetween and sealed at three sides with a laminate film. Thus, batteries containing no solution were obtained. Subsequently, the non-aqueous electrolyte solutions shown in Table 3 that were stored in the sealed bottle at 25°C for six months, 700 $\mu$L each, were injected into the batteries containing no solution from one unsealed side.

Each of the batteries after the injection of the electrolyte solution was charged at a constant current of 0.1 C (3 mA) in an open state for four hours using a charge/discharge tester (product number: ACD-01, manufactured by Asuka Electronic Co., Ltd.). Thereafter, the battery was vacuum-sealed and left to stand at room temperature for 36 hours. After being left to stand, the battery was discharged at a constant current of 0.2 C (6 mA) to a cutoff voltage of 2.75 V, an excess of the laminate film was torn, and the battery was degassed by vacuum sealing. Thus, laminate batteries (cells) with a voltage of 4.2 V and a capacity of 30 mAh were prepared. The degassed cells were charged at a constant voltage of 4.2 V and a constant current of 0.5 C (15 mA) for five hours and discharged at a constant current of 0.2 C (6 mA) to a cutoff voltage of 2.75 V The cells were charged again at a constant current of 0.5 C (15 mA) for an hour to 50% state of charge (SOC) and left at room temperature for two weeks. After being left to stand, the cells were discharged at 0.2 C (6 mA) to a cutoff voltage of 2.75 V The above-described process is referred to as aging of the cell.

[Evaluation of Battery]

(Initial Interface Resistance)

Each of the cells after the aging was charged to 50% SOC at a constant current of 0.5 C (15 mA) and 4.2 V at room temperature for an hour using a charge/discharge tester. Subsequently, the impedance of the cell was measured with an impedance analyzer (product number: VSP-300, manufactured by BioLogic) under the conditions of 25°C and a frequency range from 1 GHz to 10 MHz or -30°C and a frequency range from 1 GHz to 1 MHz. A real axis resistance (interface resistance) was obtained from a frequency at which an arc of the measurement value diverges. The frequency at which the arc diverges refers to a frequency at which a value of an imaginary axis reaches the minimum in a frequency range of 10 Hz to 0.001 Hz. Specifically, the real axis resistance when the imaginary axis resistance was zero was defined as a bulk resistance, and the value obtained by subtracting the bulk resistance from the real axis resistance when the imaginary axis resistance was the maximum in a low frequency range below 10 Hz was defined as the interface resistance.

(DCR)

After the impedance measurement, the cell was charged at a constant current of 0.5 C (15 mA) and a constant voltage of 4.2 V at room temperature to reach a fully charged state (100% SOC) or 50% SOC. Subsequently, the cell of 100% or 50% SOC was left for 30 minutes, discharged at 0.2 C (6 mA) for 10 seconds, left for another 30 minutes, discharged at 1 C (30 mA) for 10 seconds, left for another 30 minutes, and then discharged at 2 C (60 mA) for 10 seconds. The discharging currents were plotted on the horizontal axis, the difference ($\Delta V$) between the voltage at the start of the discharge at each discharging current and a closed-circuit voltage after 10 seconds from the start of the discharge was plotted on the vertical axis, and the slope of a straight line I-V was taken as the DCR of the cell.

(Self-Discharge)

The cell after the aging was charged at a constant voltage of 4.2 V and a constant current of 0.5 C (15 mA) at room temperature to reach the fully charged state (100% SOC). An open circuit voltage (OCV) of the fully charged cell was measured at room temperature, and this measurement value was defined as "initial OCV"
The fully charged cell was stored at 60°C for four weeks. The cell after the storage was cooled at room temperature for three hours, and the OCV of the cell was measured at room temperature. This measurement value was defined as "OCV after storage."
An "OCV difference ($\Delta V$) before and after storage" was determined by the following mathematical equation (1) using the measurement results of the "initial OCV" and the "OCV after storage."
[Mathematical 1]

$$\text{"OCV difference } (\Delta V) \text{ before and after storage"} = \text{"Initial OCV"} - \text{"OCV after storage"} \quad (1)$$

The smaller the "OCV difference ($\Delta V$) before and after storage" is, i.e., the smaller the degree of decrease in "OCV after storage" relative to the "initial OCV" is, the less the self-discharge of the battery occurs.

(Charge-Discharge Cycle Characteristics)

The cell after the aging was transferred to a charge/discharge device set at 45°C, and the temperature was controlled for an hour. A cycle test of the cell, 500 cycles in total, was performed at 45°C under the following charge/discharge conditions (cycle conditions). A capacity retention rate after the 500th cycle was calculated by the mathematical equation (2).

(Cycle Conditions)

- Charge: charge at a constant current of 1 C (30 mA) and a constant voltage of 4.2 V to a cutoff current of 0.02 C (0.6 mA), pause for 10 minutes
- Discharge: discharge at a constant current (CC) of 1 C (30 mA) to a cutoff voltage of 2.75 V, pause for 10 minutes
[Mathematical 2]

$$\text{Capacity retention rate (\%)} = (500^{\text{th}} \text{ cycle capacity at 1 C / 1}^{\text{st}} \text{ cycle capacity at 1 C}) \times$$

$$100 \quad (2)$$

Table 3 shows the results of measurement of the initial interface resistance, DCR, OCV (self-discharge), and capacity retention rate of each battery using the non-aqueous electrolyte solution stored in the sealed bottle at 25°C for six months. In Table 3, the unit "ppm" means "ppm by mass," and the unit "%" of the $CO_2$ concentration in the gas phase part means "vol%."

[Table 3]

EP 4 336 529 A1

| Example 2 series | | Non-aqueous electrolyte Solution | | | | Sealed bottle | | Evaluation of Battery | | | | | | | |
|---|---|---|---|---|---|---|---|---|---|---|---|---|---|---|---|
| | | Salt composition | | Additive | Amount of $CO_2$ dis-solved | $CO_2$ Concentra-tion in Gas phase part | Internal pressure of container [MPa] | Initial interface resistance [$\Omega$] | | DCR ($\Omega$) | | OCV (V) | | | Capacity retention rate [%] af-ter 500 cy-cles |
| | | | | | | | | | | SOC 100% | SOC 50% | Initial | After storage | Difference in OCV be-fore and af-ter storage ($\Delta V$) | |
| | | LiPF$_6$ | LiFSI | | After stor-age | After storage | After stor-age | 25°C | -30°C | | | | | | |
| Example | 1 | 0.6 M | 0.6 M | - | 22 ppm | 10% | 0.1013 | 0.308 | 23.824 | 1.06 | 0.99 | 4.198 | 4.066 | 0.132 | 93.4 |
| | 2 | 0.6 M | 0.6 M | - | 21 ppm | 31% | 0.1013 | 0.306 | 22.822 | 1.06 | 1.00 | 4.198 | 4.066 | 0.132 | 93.5 |
| | 3 | 0.6 M | 0.6 M | - | 25 ppm | 49% | 0.1013 | 0.307 | 22.823 | 1.07 | 0.99 | 4.197 | 4.065 | 0.132 | 93.4 |
| | 4 | 0.6 M | 0.6 M | - | 31 ppm | 100% | 0.1013 | 0.306 | 22.821 | 1.06 | 0.99 | 4.197 | 4.066 | 0.131 | 93.4 |
| | 5 | 0.6 M | 0.6 M | - | 32 ppm | 99% | 0.1115 | 0.304 | 22.818 | 1.06 | 1.00 | 4.196 | 4.068 | 0.128 | 93.6 |
| | 6 | 0.6 M | 0.6 M | - | 35 ppm | 99% | 0.2027 | 0.304 | 22.819 | 1.05 | 0.99 | 4.195 | 4.069 | 0.126 | 93.5 |
| | 7 | 0.6 M | 0.6 M | 0.5 mass % LiPO$_2$F$_2$ | 28 ppm | 52% | 0.1013 | 0.302 | 22.504 | 1.05 | 0.98 | 4.195 | 4.072 | 0.123 | 93.5 |
| | 8 | 0.6 M | 0.6 M | 0.5 mass % LiPO$_2$F$_2$ | 29 ppm | 100% | 0.1013 | 0.303 | 22.510 | 1.04 | 0.98 | 4.196 | 4.073 | 0.123 | 93.4 |
| | 9 | 1.2 M | - | - | 21 ppm | 52% | 0.1013 | 0.330 | 31.184 | 1.10 | 1.08 | 4.198 | 4.058 | 0.140 | 902 |
| | 10 | 1.2 M | - | 0.5 mass % LiPO$_2$F$_2$ | 23 ppm | 51% | 0.1013 | 0.322 | 23.205 | 1.08 | 1.06 | 4.198 | 4.060 | 0.138 | 90.3 |

23

(continued)

| Example 2 series | | Non-aqueous electrolyte Solution | | | | Sealed bottle | | | Evaluation of Battery | | | | | | | |
| | | Salt composition | | Additive | Amount of $CO_2$ dissolved | $CO_2$ Concentration in Gas phase part | Internal pressure of container [MPa] | Initial interface resistance [Ω] | | DCR (Ω) | | OCV (V) | | | Capacity retention rate [%] after 500 cycles |
| | | | | | | | | | | SOC 100% | SOC 50% | Initial | After storage | Difference in OCV before and after storage (ΔV) | |
| | | $LiPF_6$ | LiFSI | | After storage | After storage | After storage | 25°C | -30°C | | | | | | |
| Comparative Example | 1 | 0.6 M | 0.6 M | - | 10 ppm | 1% | 0.1013 | 0.337 | 32.541 | 1.17 | 1.09 | 4.198 | 4.045 | 0.153 | 92.2 |
| | 2 | 0.6 M | 0.6 M | - | 14 ppm | 7% | 0.1013 | 0.335 | 32.465 | 1.14 | 1.07 | 4.197 | 4.047 | 0.150 | 92.4 |
| | 3 | 0.6 M | 0.6 M | - | 14 ppm | 8% | 0.2027 | 0.335 | 32.447 | 1.14 | 1.06 | 4.197 | 4.046 | 0.151 | 92.1 |
| | 4 | 0.6 M | 0.6 M | 0.5 mass % $LiPO_2F_2$ | 9 ppm | 0% | 0.1013 | 0.331 | 23.800 | 1.13 | 1.04 | 4.196 | 4.055 | 0.141 | 92.3 |
| | 5 | 1.2 M | - | - | 13 ppm | 7% | 0.1013 | 0.424 | 43.958 | 1.16 | 1.14 | 4.195 | 4.056 | 0.139 | 89.5 |
| | 6 | 1.2 M | - | 0.5 mass % $LiPO_2F_2$ | 9ppm | 1% | 0.1013 | 0.375 | 30.235 | 1.14 | 1.10 | 4.195 | 4.057 | 0.138 | 89.7 |

[Discussion on Tables 2 and 3]

(Initial Interface Resistance and DCR)

- A comparison between Example 1 and Comparative Examples 1 to 3 shown in Table 2 indicates that the amount of $CO_2$ dissolved in each of the electrolyte solutions of Comparative Examples 1 to 3 fell below 20 ppm by mass during storage in the sealed bottle at 25°C for six months when the concentration of $CO_2$ in the gas phase part in the sealed bottle was low (less than 10 vol%). The results shown in Table 3 indicate that the initial interface resistance and the DCR were not sufficiently reduced in Comparative Examples 1 to 3. The insufficient reduction of the initial interface resistance and the DCR is caused by the decrease in the amount of $CO_2$ dissolved in the electrolyte solution due to the differences in how the electrolyte solution used was stored, and thus, makes the battery performance unstable. On the other hand, in Example 1, the amount of $CO_2$ dissolved in the electrolyte solution after storage was maintained at 20 ppm by mass or more. This indicates that the initial interface resistance and the DCR were sufficiently and stably reduced.
- A comparison between Examples 1 to 4 shown in Table 3 indicates that the initial interface resistance and the DCR were reduced to the same degree when the $CO_2$ concentration in the gas phase part in the sealed bottle was 10% or more. In this case, a sufficient amount of $CO_2$ can be kept dissolved, and the initial interface resistance and the DCR can be stably reduced, although the electrolyte solution dissolving $CO_2$ is stored in the sealed bottle for a long period of time. A comparison between Examples 1 to 4 shown in Table 2 indicates that the amount of $CO_2$ dissolved in the electrolyte solution after storage increases over the initial amount of dissolved $CO_2$ with the increase in the concentration of $CO_2$ in the gas phase part. A presumable cause of this phenomenon is that the higher the concentration of $CO_2$ in the gas phase part is, the more easily $CO_2$ in the gas phase part dissolves into the electrolyte solution dissolving $CO_2$ in the liquid phase part. The increase in the amount of $CO_2$ dissolved in the $CO_2$ dissolving electrolyte solution after storage enhances the improvement caused by the dissolution of $CO_2$.
- A comparison between Examples 4 to 6 shown in Table 3 indicates that the amount of $CO_2$ dissolved in the electrolyte solution was stabilized by keeping the internal pressure of the sealed bottle at 0.1115 MPa (1.1 atm) or more, and the initial interface resistance and the DCR were stably reduced. In addition, a comparison between Examples 4 to 6 shown in Table 2 indicates that the concentration of $CO_2$ in the gas phase part after storage decreases with the increase in the internal pressure of the container, and the amount of $CO_2$ dissolved in the electrolyte solution after storage increased over the initial amount of $CO_2$ dissolved in the electrolyte solution. A presumable cause of this phenomenon is that the higher the internal pressure of the container is, the more easily $CO_2$ in the gas phase part dissolves into the electrolyte solution dissolving $CO_2$ in the liquid phase part. The increase in the amount of $CO_2$ dissolved in the $CO_2$ dissolving electrolyte solution after storage enhances the improvement caused by the dissolution of $CO_2$.

- A comparison between Examples 3 and 9 in which the concentrations of $CO_2$ in the gas phase part in the sealed bottle were close indicates that the electrolytes containing LiFSI effectively reduce the initial interface resistance and the DCR.
- A comparison between Examples 3, 4, and 9 and Examples 7, 8, and 10 also indicates that the addition of $LiPO_2F_2$ to the electrolyte solution effectively reduces the initial interface resistance and the DCR.
- A comparison between Examples 7 and 8 and Example 10 also indicates that the mixed salt composition containing LiFSI and $LiPF_6$ reduces the initial interface resistance and the DCR more effectively due to the addition of $LiPO_2F_2$ than the simple salt composition containing $LiPF_6$ alone. In other words, it was found that the combination of LiFSI and $LiPO_2F_2$ caused a synergistic effect.

(Self-Discharge)

Similar tendency was observed for the self-discharge as for the initial interface resistance and the DCR. This will be specifically described below.

- A comparison between Comparative Examples 2 and 5 indicates that a low concentration of $CO_2$ in the gas phase part in the sealed bottle reduced the amount of $CO_2$ dissolved in the electrolyte solution to less than 20 ppm by mass during storage in the sealed bottle at 25°C for six months, and as a result, the OCV difference ($\Delta V$) before and after storage increased, that is, the self-discharge was not reduced sufficiently. The insufficient reduction of the self-discharge is caused by the decrease in the amount of $CO_2$ dissolved in the electrolyte solution due to the differences in how the electrolyte solution used was stored, and thus, makes the storage characteristics of the battery unstable. The batteries using the electrolyte solution containing LiFSI caused the greater self-discharge than the batteries using the electrolyte solution of a simple salt composition containing $LiPF_6$ alone.

- In each Example, the amount of $CO_2$ dissolved in the electrolyte solution after storage was maintained at 20 ppm by mass or more. Thus, the OCV difference ($\Delta V$) before and after storage was small, that is, the self-discharge was reduced sufficiently and stably.
- A comparison between Examples 1 to 8 and Comparative Examples 1 to 4 and a comparison between Examples 9 and 10 and Comparative Examples 5 and 6 indicate that the mixed salt composition containing LiFSI and $LiPF_6$ reduced the self-discharge more effectively than the simple salt composition containing $LiPF_6$ alone.

(Charge-Discharge Cycle Characteristics)

- Similar tendency was observed for the charge-discharge cycle characteristics as for the initial interface resistance and the DCR. This will be specifically described below.
- A comparison between Examples 1 to 8 and Comparative Examples 1 to 4 and a comparison between Examples 9 and 10 and Comparative Examples 5 and 6 indicate that the mixed salt composition containing LiFSI and $LiPF_6$ improved the charge-discharge cycle characteristics more effectively than the simple salt composition containing $LiPF_6$ alone.

(Conclusion)

When a non-aqueous electrolyte solution containing a sulfonylimide compound (lithium salt) such as LiFSI is stored by a usual method, the lithium salt is decomposed during storage, deteriorating the non-aqueous electrolyte solution. When the storage method of the present disclosure is applied, the decomposition of the lithium salt can be reduced although the water content in the non-aqueous electrolyte solution after storage exceeds 50 ppm by mass. Further, when the electrolyte solution dissolving $CO_2$ is stored by a usual method, $CO_2$ in the electrolyte solution is gradually lost, making the improvement caused by the dissolution of the $CO_2$ unstable. When the storage method of the present disclosure is applied, the amount of $CO_2$ dissolved in the electrolyte solution varies less, and the improvement caused by the dissolution of $CO_2$ can be stably obtained. In particular, the non-aqueous electrolyte solution using LiFSI causes great self-discharge, and thus, the storage method of the present disclosure is confirmed to be a significant method when handling the problems specific to the non-aqueous electrolyte solution containing LiFSI.

**Claims**

1. A method for storing a non-aqueous electrolyte solution containing a lithium salt in a sealed container, wherein at least one of carbon dioxide ($CO_2$) or carbon monoxide (CO) occupying a gas phase part in the sealed container has a concentration of 10% or more.

2. The method of claim 1, wherein a positive pressure is maintained inside the sealed container.

3. The method of claim 1 or 2, wherein an internal pressure of the sealed container is kept at 1.1 atm or more.

4. The method of any one of claims 1 to 3, wherein the non-aqueous electrolyte solution contains a carbonate solvent.

5. The method of any one of claims 1 to 4, wherein the non-aqueous electrolyte solution contains at least one of carbon dioxide ($CO_2$), carbon monoxide (CO), a bicarbonate ion ($HCO_3^-$), or a carbonate ion ($CO_3^{2-}$) dissolved in a total amount of 20 ppm by mass or more.

6. The method of any one of claims 1 to 5, wherein the lithium salt contains a sulfonylimide compound represented by the general formula (1):

$$LiN(R^1SO_2)(R^2SO_2) \qquad (1)$$

(wherein $R^1$ and $R^2$ are identical or different from each other and each represent a fluorine atom, an alkyl group with 1 to 6 carbon atoms, or a fluoroalkyl group with 1 to 6 carbon atoms).

7. The method of claim 6, wherein

the lithium salt further contains at least one selected from the group consisting of a compound represented by the general formula (2), a compound represented by the general formula (3), and $LiAsF_6$,
$LiPF_a(C_mF_{2m+1})_{6-a}$ (2) (where $0 \leq a \leq 6$ and $1 \leq m \leq 4$),
$LiBF_b(C_nF_{2n+1})_{4-b}$ (3) (where $0 \leq b \leq 4$ and $1 \leq n \leq 4$).

8. The method of claim 6 or 7, wherein
the non-aqueous electrolyte solution further contains a compound represented by the general formula (4):

$$M^1PO_cP_d \qquad (4)$$

(where $M^1$ represents an alkali metal element, $1 \leq c \leq 3$, and $1 \leq d \leq 3$).

## INTERNATIONAL SEARCH REPORT

International application No.

**PCT/JP2022/011323**

### A. CLASSIFICATION OF SUBJECT MATTER

*H01G 11/58*(2013.01)i; *H01M 6/16*(2006.01)i; *H01M 10/0566*(2010.01)i; *H01M 10/0567*(2010.01)i; *H01M 10/0568*(2010.01)i; *H01M 10/0569*(2010.01)i

FI: H01M10/0566; H01M10/0569; H01M10/0567; H01M10/0568; H01M6/16 A; H01G11/58

According to International Patent Classification (IPC) or to both national classification and IPC

### B. FIELDS SEARCHED

Minimum documentation searched (classification system followed by classification symbols)

H01G11/58; H01M10/0566; H01M10/0567; H01M10/0568; H01M10/0569; H01M6/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2008-077950 A (UBE IND., LTD.) 03 April 2008 (2008-04-03) claims 1, 5, paragraphs [0019]-[0022], example 1 | 1, 4-6 |
| A | | 2, 3, 7, 8 |
| A | JP 2013-077404 A (TOSHIBA CORP.) 25 April 2013 (2013-04-25) entire text, all drawings | 1-8 |
| A | JP 2019-050102 A (TOYOTA MOTOR CORP.) 28 March 2019 (2019-03-28) entire text, all drawings | 1-8 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 April 2022** | **10 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/011323**

| Patent document cited in search report | | | Publication date (day/month/year) | Patent family member(s) | | | Publication date (day/month/year) |
|---|---|---|---|---|---|---|---|
| JP | 2008-077950 | A | 03 April 2008 | (Family: none) | | | |
| JP | 2013-077404 | A | 25 April 2013 | US | 2013/0081264 | A1 | |
| | | | | entire text, all drawings | | | |
| | | | | CN | 103035951 | A | |
| | | | | KR 10-2013-0035181 | | A | |
| JP | 2019-050102 | A | 28 March 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013077567 A

- JP 2021032987 A